(19) **Europäisches Patentamt**
**European Patent Office**
**Office européen des brevets**

(11) **EP 1 843 192 A1**

(12) **EUROPEAN PATENT APPLICATION**
published in accordance with Art. 158(3) EPC

(43) Date of publication:
**10.10.2007 Bulletin 2007/41**

(51) Int Cl.:
*G02F 1/1335* (2006.01)    *G02B 3/00* (2006.01)
*G02F 1/13357* (2006.01)

(21) Application number: **05811532.0**

(22) Date of filing: **01.12.2005**

(86) International application number:
**PCT/JP2005/022090**

(87) International publication number:
**WO 2006/064670 (22.06.2006 Gazette 2006/25)**

(84) Designated Contracting States:
**DE FR**

(30) Priority: **15.12.2004 JP 2004362815**

(71) Applicant: **Sharp Kabushiki Kaisha**
**Osaka-shi, Osaka 545-8522 (JP)**

(72) Inventor: **NAGASAKA, Yukiko**
**Nara 632-0004 (JP)**

(74) Representative: **Müller, Frithjof E.**
**Müller Hoffmann & Partner**
**Patentanwälte**
**Innere Wiener Strasse 17**
**81667 München (DE)**

(54) **DISPLAY PANEL MANUFACTURING METHOD AND DISPLAY PANEL MANUFACTURING APPARATUS**

(57)    A display panel manufacturing method is provided for manufacturing a display panel including a microlens formed on a surface of a TFT substrate (2) and a light shield (11) corresponding to an inner region of an opening (5B). The method includes a step of arranging photosensitive resin (8) on a surface of the TFT substrate (2) on the same side as a backlight, and an exposing step of applying light through the opening (5B) to cure partially the photosensitive resin (8) and thereby forming a cured portion (15a). The exposing step includes a step of performing exposure while shifting a light incident angle, and changing a shifting speed of the light incident angle in one direction.

FIG.7

EP 1 843 192 A1

## Description

TECHNICAL FIELD

The present invention relates a display panel manufacturing method and a display panel manufacturing apparatus.

BACKGROUND ART

Display apparatuses such as a liquid crystal display, a plasma display, an electroluminescence display and a field-emission display can be formed in a plane form, and allows reduction in thickness. These display apparatuses are becoming a mainstream of television sets and the like. Among such display apparatuses, the liquid crystal display have been used more widely than other slim display apparatuses owing to low weight, low power consumption and the like. In addition to the television sets, the liquid crystal panels are used in personal computers, cellular phones, PDAs (Personal Digital Assistances) and the like, and further demand can be expected.

It has been requested to improve performance of the liquid crystal display panels to a further extent. For example, screens of television sets have been increasing, and it is strongly desired to improve brightness and a view angle of displayed images for achieving high-definition images on the large screen.

For improving the display quality, such a liquid crystal display panel has been proposed that a microlens array is arranged at its surface for improving brightness and a view angle. The liquid crystal display panel with the microlens array will now be described in connection with a product for mobile devices such as a cellular phone and a PDA. This kind of mobile device preferably employs a semi-transmissive liquid crystal display panel having both functions of a transmissive liquid crystal display panel that includes a backlight and performs display using light of the backlight, and a reflective liquid crystal display panel that performs display using external light.

The semi-transmissive liquid crystal display panel includes a reflector that is employed for reflecting light and is provided with minute openings, and is configured to reflect the external light by the reflector and to pass the light of the backlight through the openings. The reflector must have large openings for increasing the brightness of the transmissive display performed by the light of the backlight. However, when the openings in the reflector are increased, this results in decrease in area of a reflection surface of the reflector, and thus causes a problem that images displayed by the reflection display become dark. Thus, front brightness lowers.

For overcoming the above problem, such a method has been proposed, e.g., that a microlens is formed in a position corresponding to the openings in the reflector to increase an effective aperture ratio, and thereby the brightness of the transmissive display is proposed without increasing the openings. The arrangement of the microlens corresponding to the openings can improve both the brightness of the transmissive display and the brightness of the reflective display (see, e.g., Japanese Patent Laying-Open No. 2002-62818).

In a method of manufacturing the microlens, a photoresist layer is formed over a surface of a glass substrate, and is patterned with light passing through the openings in the reflector. The resist layer thus patterned is heated to cause thermal deformation so that the resist layer takes a form corresponding to the form of the microlens. Thereafter, dry etching is performed on the glass substrate to provide a microlens array substrate corresponding in form to the resist layer.

In the manufacturing method disclosed in Japanese Patent Laying-Open No. 2002-62818, a microlens stamper corresponding to a pixel pattern is prepared. The microlens stamper is pressed against a transparent insulating substrate carrying ultraviolet curing resin to develop high-refractivity resin. Then, the microlens stamper is released, and the ultraviolet curing resin is cured by irradiation with ultraviolet rays so that hemispheric microlenses are formed.

In the method of manufacturing the microlens disclosed in Japanese Patent Laying-Open No. 2002-62818, a TFT substrate is adhered to an opposite substrate, then a light collecting layer including a photosensitive material is formed at a surface of the opposite substrate other than the adhesion surface, and the light is applied from the side of the TFT substrate. Thereby, portions of the light-collecting layer opposed to the openings in the light shield layer are exposed, and unexposed portions of the collecting layer are removed so that the microlens is formed.

For improving a view angle of the liquid crystal display panel without using a microlens, such a liquid crystal display panel has also been disclosed that includes a plurality of regions exhibiting different orientation states of liquid crystal molecules when a voltage is applied, respectively (e.g., Japanese Patent Laying-Open No. 2004-93846). In this liquid crystal display panel, a light shield is formed in a boundary between the regions of different orientation directions. This light shield can cut off light that may leak when the liquid crystal display panel is viewed obliquely, and display quality can be improved.

Patent Reference 1: Japanese Patent Laying-Open No. 2002-62818
Patent Reference 2: Japanese Patent Laying-Open No. 2004-93846

DISCLOSURE OF THE INVENTION

PROBLEMS TO BE SOLVED BY THE INVENTION

In the art disclosed in Japanese Patent Laying-Open No. 2002-62818, it is necessary to prepare the microlens stamper so that the form of the lens cannot be determined with sufficient flexibility, and a profound lens effect cannot be achieved. Since the TFT substrate is adhered to the opposite substrate after forming the microlens on the surface of the TFT substrate, variations in alignment may occur to reduce the brightness. For sufficiently achieving the lens effect by the microlens, it is preferable that the substrate bearing the microlens at its surface has a small thickness. However, the substrate must be thick for avoiding restrictions on handling due to bending or the like, and this results in a problem of lowing of the lens effect.

In the manufacturing method disclosed in Japanese Patent Laying-Open No. 2002-62818, ultraviolet is used as the light for exposing the light-collecting layer. Since a color filter absorbs the ultraviolet rays, it is impossible to irradiate the photosensitive material with the ultraviolet rays through the color filter. Therefore, the method disclosed in the reference cannot be used for the liquid crystal display panel provided with the color filter.

In the liquid crystal display panel that has the light shield as disclosed in Japanese Patent Laying-Open No. 2004-93846, the aperture ratio is further smaller than that in the conventional liquid crystal display panel of the semi-transmissive type. Therefore, the front brightness is low. It may be attempted to change the backlight structure for avoiding the lowering of the front brightness. However, it is considerably difficult to increase the front brightness while keeping a large view angle. Therefore, it is effective to arrange the microlens array on the substrate on the same side as the backlight so that the effective aperture ratio may be increased and both the high front brightness and the large view angle may be achieved.

As disclosed in Japanese Patent Laying-Open No. 2002-62818, it is effective in the process of forming the microlens to cure the photosensitive material by passing the light through the openings. In this manufacturing method, the microlens can be formed at a low cost, and further the microlens can be arranged precisely because the microlens is arranged in a self-aligned manner with respect to the openings. Therefore, the microlens can sufficiently offer its light collecting performance, and the liquid crystal display panel capable of display with high brightness can be manufactured. Since the light collected by the microlens disperses at the same angle as the collecting or converging angle after it passed the openings in the reflector, the view angle can be improved.

When the manufacturing method disclosed in Japanese Patent Laying-Open No. 2002-62818 is applied to the liquid crystal display panel having the light shield, the light shield partially cuts off the light curing the photosensitive resin during the processing of forming the microlens array, and the wave surface of the light passed through the opening cannot be uniform. Therefore, a step or a level difference occurs at the lens surface of the microlens thus formed, and impairs lens characteristics. This results in a problem that good brightness and good view angle cannot be obtained.

MEANS FOR SOLVING THE PROBLEMS

An object of the invention is to provide a method and an apparatus of manufacturing a display panel that includes a light shield corresponding to each pixel and particularly has good lens characteristics.

According to the invention, a method of manufacturing a display panel including a microlens formed at a surface of a substrate on an arrangement side of a backlight, and a light shield formed corresponding to an inner region of an opening provided for forming a pixel, includes a steps of arranging a photosensitive material on a surface of the substrate on the arrangement side of the backlight, and an exposing step of applying light through the opening from a side opposite to the arrangement side of the backlight, and thereby partially curing the photosensitive material. The exposing step includes a step of performing exposure while shifting an incident angle of the light, and thereby curing the photosensitive material to exhibit a section having a convex form in one direction. The exposing step includes a step of changing at least one of a speed of shifting the incident angle in the one direction and an intensity of the light. This method can manufacture the display panel provided with the microlens of good lens characteristics.

Preferably, according to the invention, the exposing step includes a step of discontinuously changing the exposure. According to this method, it is merely required to change the exposure of the photosensitive resin at discontinuous points, and the control of the exposure of the photosensitive resin can be easy.

Preferably, according to the invention, the exposing step is executed such that the shifting speed at a portion including a top of the convex form is lower than that at a portion including a foot of the convex form. Also, the exposing step is executed such that the intensity of the light at the portion including the top of the convex form is larger than that at the portion including the foot of the convex form. By employing either of these methods, it is possible to form the microlens having a good sectional form while suppressing occurrence of a step.

Preferably, according to the invention, the exposing step is executed to cause discontinuously the change in exposure at each of a discontinuous point $-\theta_{1a}$ and a discontinuous point $+\theta_{1b}$, and the two discontinuous points fall within ranges defined by the following two formulas:

$$-\tan^{-1}\{((P_X - W_X)/2)(T/n)\} \le -\theta_{1a} \le -\tan^{-1}\{(P_X - W_X)/2 - (W_X - W_A)/2)(T/n)\} \cdots$$
$$(1)$$

$$\tan^{-1}\{((P_X - W_X)/2 - (W_X - W_A)/2)(T/n)\} \le +\theta_{1b} \le \tan^{-1}\{(P_X - W_X)/2)(T/n)\} \cdots (2)$$

where $P_X$ represents a pitch of the openings in the one direction, $W_x$ indicates a width of the opening in the one direction, $W_A$ indicates a width of the light shield in the one direction, T indicates a thickness of the substrate bearing the microlens, n indicates a refractivity of the substrate, $+\theta_{1a}$ and $-\theta_{1b}$ are incident angles of the light with respect to a direction perpendicular to a main surface of the substrate in the one direction, and the plus and the minus indicate one and the other sides, respectively. By employing this method, it is possible to suppress effectively the step or level difference that may occur at the microlens.

Preferably, according to the invention, the display panel has the light shield arranged in the position substantially corresponding to a center of the opening and taking an island-like form. By employing this method, the effect of the invention described above can be more remarkable.

According to the invention, an apparatus of manufacturing a display panel including a microlens formed at a surface of a substrate on an arrangement side of a backlight, and a light shield formed corresponding to an inner region of an opening provided for forming a pixel, includes exposing means for exposing a photosensitive material. The exposing means is configured to allow changing of an incident angle of light, and includes at least one of means for changing a shifting speed of the incident angle for the exposure and means for changing an intensity of the light. This structure can provide the manufacturing apparatus for the display panel provided with the microlens that has good lens characteristics.

EFFECTS OF THE INVENTION

The invention can provide the method of manufacturing the display panel provided with the microlens having good lens characteristics as well as the apparatus of manufacturing the display panel.

BRIEF DESCRIPTION OF THE DRAWINGS

Fig. 1 is a schematic cross section showing on an enlarged scale a first liquid crystal display panel of an embodiment.
Fig. 2 is a schematic perspective view of the first liquid crystal display panel of the embodiment.
Fig. 3 schematically illustrates one pixel in the first liquid crystal display panel of the embodiment.
Fig. 4 is a schematic cross section of the first liquid crystal display panel of the embodiment.
Fig. 5 illustrates first step in a method of manufacturing the liquid crystal display panel of the embodiment.
Fig. 6 illustrates second step in a method of manufacturing the liquid crystal display panel of the embodiment.
Fig. 7 illustrates third step in a method of manufacturing the liquid crystal display panel of the embodiment.
Fig. 8 illustrates fourth step in a method of manufacturing the liquid crystal display panel of the embodiment.
Fig. 9 illustrates another configuration of first step in the method of manufacturing a liquid crystal display panel of the embodiment.
Fig. 10 illustrates another configuration of second step in the method of manufacturing a liquid crystal display panel of the embodiment.
Fig. 11 illustrates another configuration of third step in the method of manufacturing a liquid crystal display panel of the embodiment.
Fig. 12 illustrates another configuration of fourth step in the method of manufacturing a liquid crystal display panel of the embodiment.
Fig. 13 is a schematic cross section taken along a plane in a lens direction for illustrating an exposing method in the embodiment.
Fig. 14 is a schematic cross section taken along a plane in a lens ridge direction for illustrating the exposing method in the embodiment.
Fig. 15 is a graph for illustrating the exposing method in the embodiment.
Fig. 16 is a graph illustrating an exposing method of a comparative example in the embodiment.

Fig. 17 schematically illustrates the exposure by the exposing method in the embodiment.

Fig. 18 is a schematic enlarged cross section illustrating the incident angle in the exposing method of the embodiment.

Fig. 19 is a graph illustrating a residual film thickness in the exposing method according to the invention and the exposing method of the comparative example.

Fig. 20 is a graph illustrating a lens height in the exposing method of the invention

Fig. 21 is graph illustrating the lens height in the exposing method of the comparative example.

Fig. 22 is a graph illustrating another exposing method of the embodiment.

Fig. 23 is a graph illustrating still another exposing method of the embodiment.

Fig. 24 schematically illustrates an island-like light shield of another configuration in the embodiment.

Fig. 25 schematically illustrates an island-like light shield of still another configuration in the embodiment.

Fig. 26 schematically illustrates a light shield of further another configuration in the embodiment.

Fig. 27 is a schematic perspective view of a second liquid crystal display panel in the embodiment.

Fig. 28, schematically illustrates one pixel of the second liquid crystal display panel in the embodiment.

Fig. 29 is a first schematic cross section illustrating a sectional form of a microlens of the second liquid crystal display panel in the embodiment.

Fig. 30 is a second schematic cross section illustrating a sectional form of the microlens of the second liquid crystal display panel in the embodiment.

DESCRIPTION OF THE REFERENCE SIGNS

1 liquid crystal display panel, 2 TFT substrate, 3 and 17 microlens, 4 opposite substrate, 5, 5R, 5G and 5B opening, 6 black matrix, 7 color filter, 8 photosensitive resin, 9 liquid crystal layer, 10 light shield layer, 11 - 14 light shield, 15a cured portion, 15b uncured portion, 20 pixel, 22 exposure quantity distribution (at constant scan speed), 24 exposure quantity distribution (for obtaining an ideal lens form), 25 exposure quantity distribution (in the invention), 26 step, 41, 42, 43a, 43b, 44a, 44b, 45a, 45b, 46a, 46b, 50 and 55 arrow

BEST MODES FOR CARRYING OUT THE INVENTION

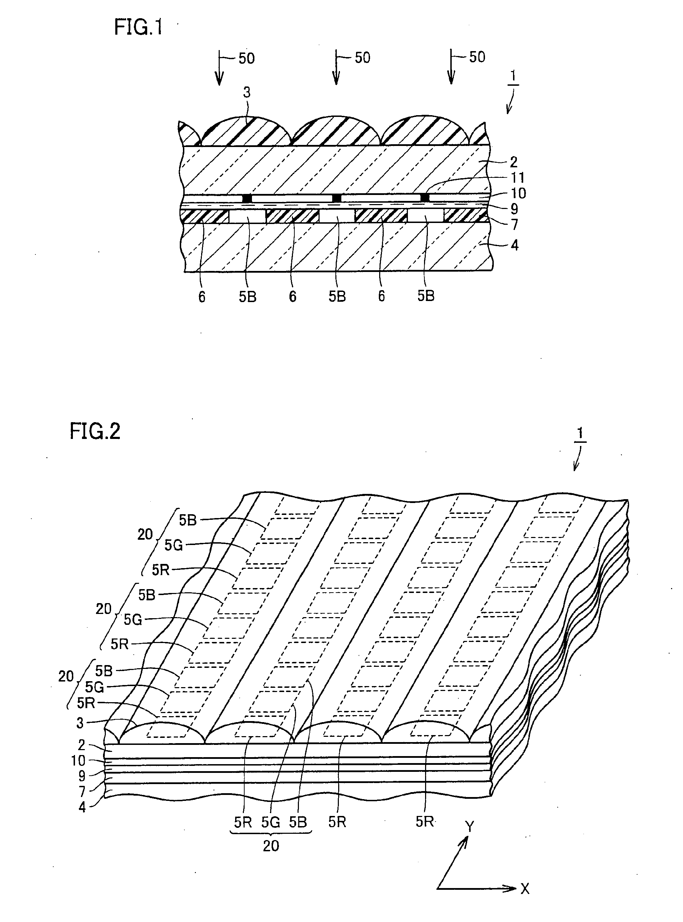

Referring to Figs. 1 to 30, a method and an apparatus of manufacturing a display panel of embodiments of the invention will be described. The embodiments will be described particularly in connection with liquid crystal display panels among display panels.

Figs. 1 to 4 illustrate a first liquid crystal panel manufactured by the manufacturing method of the embodiment.

Fig. 1 is a schematic cross section of the first liquid crystal display panel of the embodiment. The liquid crystal display panel of the embodiment is a color liquid crystal display panel. The liquid crystal display panel of the embodiment is provided with a plurality of regions each containing liquid crystal molecules in an orientation state different from those in the other regions for improving a view angle, and is also provided with light shields at positions corresponding to boundaries between the regions of the different orientation states.

Liquid crystal display panel 1 includes a TFT substrate 2 provided at its surface with TFTs, and an opposite substrate 4. TFT substrate 2 and opposite substrate 4 are adhered together by a seal member (not shown) with their main surfaces opposed to each other. A portion surrounded by TFT substrate 2, opposite substrate 4 and the seal member is filled with liquid crystal. A liquid crystal layer 9 has a thickness of several micrometers.

TFT substrate 2 is provided at its surface with the TFTs (not shown). TFT substrate 2 is also provided with a light shield layer 10, and light shields 11 are formed at portions of light shield layer 10. TFT substrate 2 is provided with pixel electrodes corresponding to red, blue and green picture elements, respectively. Each pixel electrode is connected to the corresponding TFT. TFT substrate 2 is further provided with electric circuitry including a gate bus line, a source bus line and the like for driving the TFTs.

A color filter 7 is arranged on a surface of opposite substrate 4. Openings 5B is formed at color filter 7. Blue filters are arranged in openings 5B, respectively.

In this liquid crystal display panel, backlight is applied from the side of TFT substrate 2 as indicated by arrows 50. Microlenses 3 are formed at one of main surfaces of TFT substrate 2, and particularly at the outer main surface on the same side as the backlight. Microlens 3 has a section of a convex form. Microlens 3 has a curved lens surface. The plurality of microlenses 3 are arranged to form a microlens array.

Fig. 2 is a perspective view of the liquid crystal display panel. Fig. 2 is viewed from the side where the microlens is formed. Color filter 7 includes openings 5R containing color filers of red, openings 5G containing color filters of green and openings 5B containing color filters of blue. Each of openings 5R, 5G and 5B provides a picture element.

The openings are repetitively arranged in the order of red, green and blue. Thus, three kinds of picture elements are successively and linearly arranged in each column. In Fig. 2, the picture elements of the same color are arranged in the X direction, and the three kinds of picture elements are successively arranged in the Y direction.

Microlens 3 extends in the direction of alignment of openings 5R, 5G and 5B. Thus, microlens 3 has a longitudinal direction matching the Y direction in Fig. 2. The plurality of microlenses 3 are employed. Microlens 3 have longitudinal directions substantially parallel to each other.

Referring to Fig. 2, the microlens in the liquid crystal display panel of the embodiment has a form that can be formed by cutting a circular cylinder along one plane extending in the longitudinal direction of the cylinder. In the invention, this form of the microlens is referred to as a form of a cylindrical lens array. In this invention, the direction in which a convex section is formed is referred to as a lens direction, and a direction in which a uniform height continues is referred to as a lens ridge direction. In Fig. 2, the X direction is the lens direction, and the Y direction is the lens ridge direction.

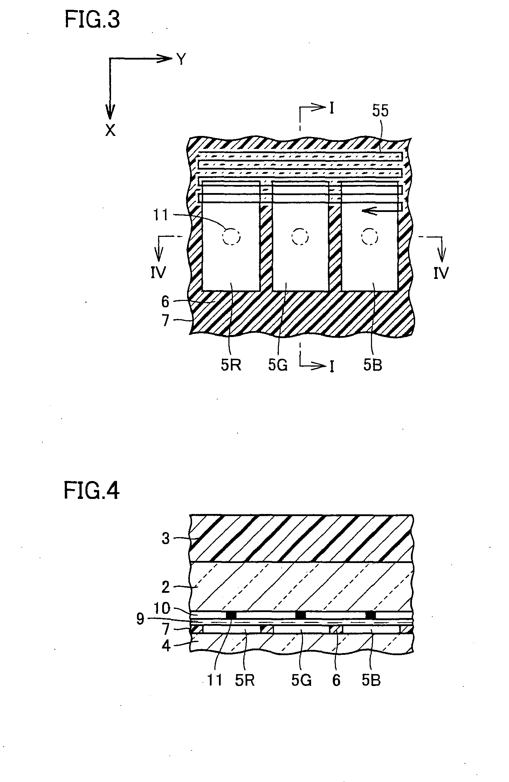

Figs. 3 and 4 illustrate one pixel. Fig. 3 is a schematic plan of one pixel. Fig. 4 is a cross section taken along line IV - IV in Fig. 3. One pixel is formed of one opening 5R, one opening 5G and one opening 5B. In this embodiment, each of openings 5R, 5G and 5B has a rectangular form in a plane view. Light shields 11 are arranged at positions corresponding to the insides of openings 5R, 5G and 5B, respectively. In this embodiment, light shield 11 is circular in a plane view. Light shield 11 is arranged in a position corresponding to a center of gravity of the rectangle in the plane view of each of openings 5R, 5G and 5B. Light shield 11 is formed in a position immediately above a boundary between regions of different orientation directions of the liquid crystal molecules.

Color filters 7 are arranged in openings 5R, 5G and 5B of color filter 7 to form picture elements, respectively. A black matrix 6 is formed in positions between openings 5R, 5G and 5B. In other words, openings 5R, 5G and 5B are formed in black matrix 6, and each are surrounded by black matrix 6. Black matrix 6 is configured to cut off the light.

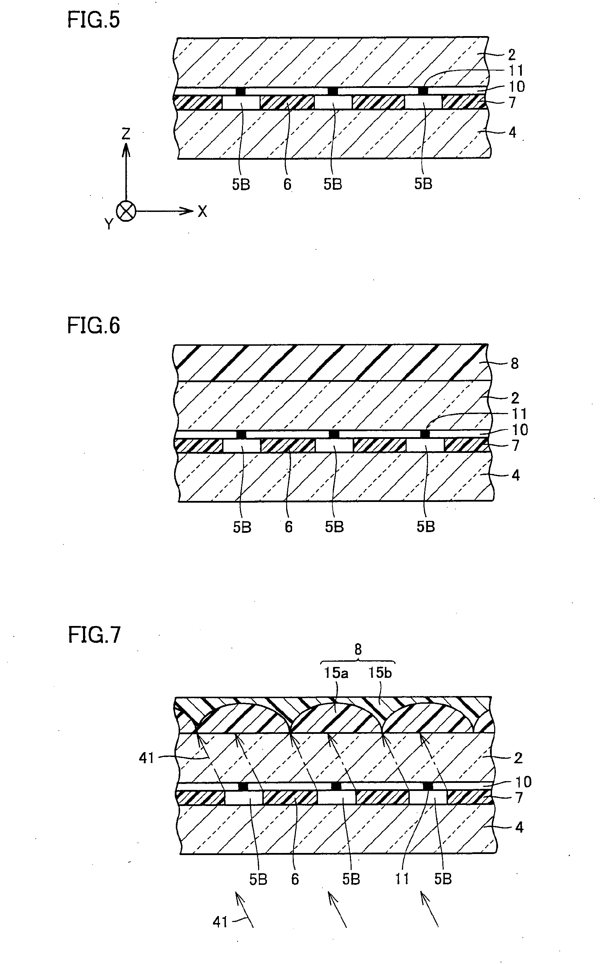

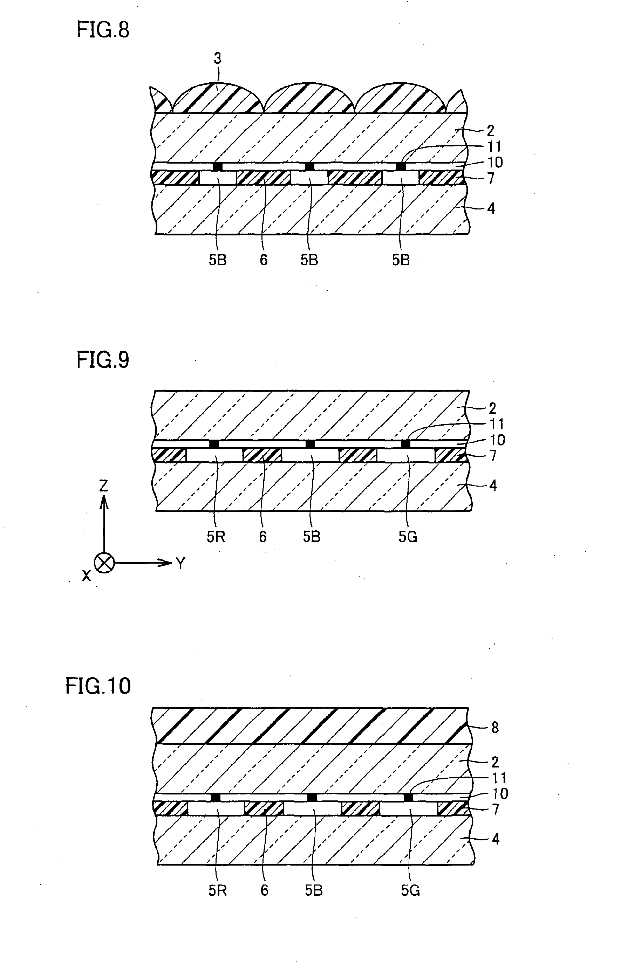

Figs. 5 to 12 illustrates steps in a method of manufacturing the microlens in the embodiment. These figures do not show the liquid crystal layer for the sake of simplicity. The backlight is applied from the same side as the TFT substrate. The microlens array is formed at one of the main surfaces of the TFT substrate, and particularly at the main surface on the same side as the backlight. Figs. 5 to 8 are schematic cross sections taken along a plane in the lens direction. Figs. 9 to 12 are schematic cross sections taken along a plane in the lens ridge direction.

As shown in Figs. 5 to 9, TFT substrate 2 provided with light shield layer 10 is adhered to opposite substrate 4 provided with color filter 7 with an liquid crystal layer therebetween. Light shields 11 take island forms, and are arranged in positions substantially corresponding to centers of openings 5R, 5G and 5B, respectively.

As shown in Figs. 6 to 10, a photosensitive material, i.e., photosensitive resin 8 is arranged on the outer main surface of TFT substrate 2. Preferably, photosensitive resin 8 has a photosensitivity to the light of a wavelength of 400 nm or more. The light for exposing photosensitive resin 8 is applied from the side of opposite substrate 4 through openings 5R, 5G and 5B. Therefore, the color filter arranged in openings 5R, 5G and 5B can cut off the light lower than 400 nm. Therefore, it is preferable that photosensitive resin 8 has the sensitivity to the wavelength of 400 nm or more. For example, general photosensitive materials have a photosensitivity between about 365 nm and about 405 nm. Photosensitive resin 8 in the embodiment preferably has the sensitivity to about 405 nm.

When cured photosensitive resin 8 absorbs the red, green and blue light rays, the brightness of the liquid crystal display panel lowers. Therefore, it is preferable that photosensitive resin 8 does not absorb the light in the wavelength range of a visible light, i.e., between 420 nm and 700 nm. In this embodiment, a negative dry film resist is used as photosensitive resin 8.

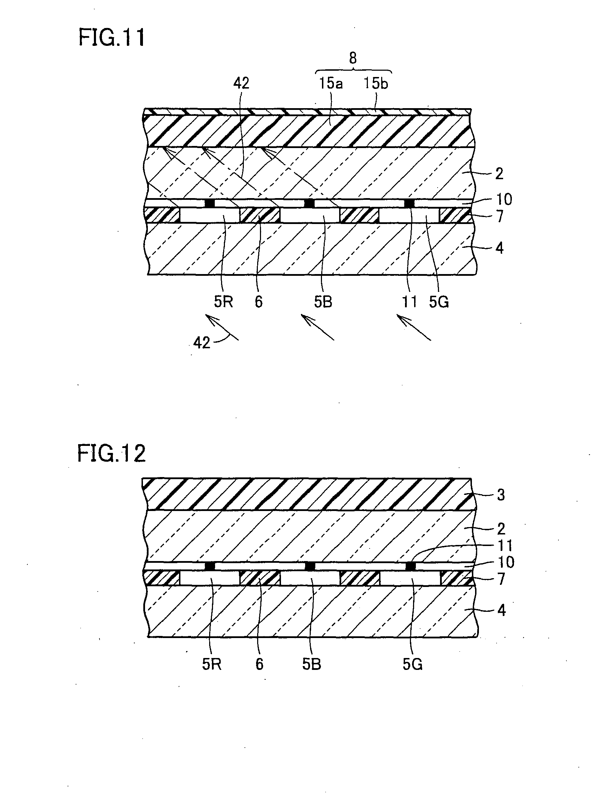

Then, an exposing step is executed as shown in Figs. 7 and 11. In this embodiment, parallel light rays having a wavelength of about 405 nm are applied in directions indicated by arrows 41 and 42 from the same side as opposite substrate 4. Color filter 7 cuts off the parallel light rays in the region of black matrix 6.

In this embodiment, the light that has the wavelength of about 405 nm and is used for the exposure passes through openings 5B and 5R in color filter 7. In opening 5G, however, the color filter absorbs the light of about 405 nm so that it does not take part in curing. Among the light rays incident on openings 5R, 5G and 5B, therefore, the light rays passed through openings 5R and 5B primarily cure the photosensitive resin to form the microlens in the embodiment.

In the lens direction, as shown in Fig. 7, the incident angle of the light is shifted with respect to a direction perpendicular to the main surface of TFT substrate 2 so that photosensitive resin 8 is partially cured to form a cured portion 15a. Cured portion 15a has a form of the cylindrical lens array. An uncured portion 15b is a portion of photosensitive resin 8 that is not cured.

Referring to Fig. 11, the exposure of photosensitive resin 8 is also performed in the lens ridge direction primarily through openings 5B. Thereby, cured portion 15a is formed by curing photosensitive resin 8 with light irradiation. By shifting the incident angle of the light in the lens ridge direction, the microlens array having a substantially uniform height in the section is formed. In Fig. 11, an angle indicated by an arrow 42 is shifted to form cured portion 15a having a form of the cylindrical lens. Photosensitive resin 8 forms uncured portion 15b in a region outside the microlens.

As shown in Figs. 8 and 12, developing processing is performed to remove uncured portion 15b of photosensitive resin 8, and thereby microlens 3 is formed.

The exposing step of partially curing the photosensitive material will now be described in detail. The exposure of the photosensitive resin is performed through the openings.

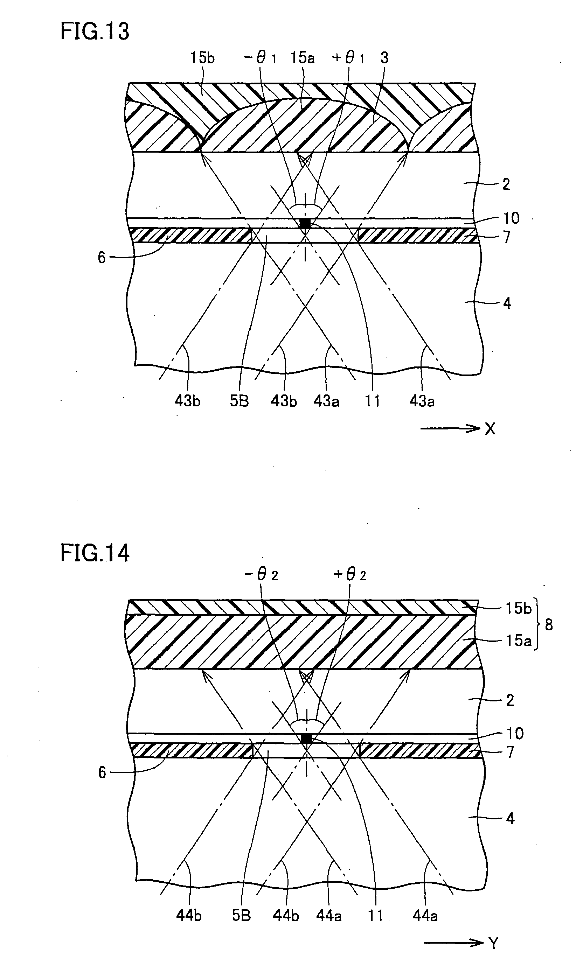

Fig. 13 is a schematic enlarged cross section taken along a plane in the lens direction. In this direction, the microlens has a section of a convex form. Thus, the exposure is performed to provide cured portion 15a having a section of a convex form in the lens direction.

In the exposing step, the exposure is continuously performed while shifting the incident angle from the incident angle of $-\theta_1$ indicated by an arrows 43a to the incident angle of $+\theta_1$ indicated by an arrow of 43b. In the invention, the light incident angle is an angle with respect to the direction perpendicular to the main surface of the substrate. In Fig. 13, a line extending toward an upper left side in the figure forms a negative angle, and a line extending toward an upper right side forms a positive angle. Cured portion 15a having the convex sectional form is formed by continuously or intermittently applying the light while shifting the incident angle from $-\theta_1$ to $+\theta_1$.

Fig. 14 shows, on an enlarged scale, a schematic cross section taken along a plane parallel to the lens ridge direction. In this embodiment, the exposure is also performed while shifting the incident angle of the light in the lens ridge direction. More specifically, the exposure is being performed over the region between the exposure region indicated by arrows 44a and the exposure region indicated by arrows 44b while turning the parallel light rays. In Fig. 14, the exposure is performed while shifting the incident angle from incident angle $-\theta_2$ to incident angle $+\theta_2$. By adjusting the shifting speed of the light incident angle, cured portion 15a having a substantially uniform height can be formed, and the microlens array having the uniform height along the lens ridge direction can be formed.

In this embodiment, the exposure is performed while shifting the incident angle with respect to the lens direction and the lens ridge direction. Referring to, e.g., Fig. 3, the exposure in this embodiment is performed by moving the parallel light rays. More specifically, after moving the parallel light rays in the lens ridge direction, the exposure position is shifted in the lens direction, and then the parallel light rays are moved in the lens ridge direction. In the embodiment, a mirror reflecting the light emitted from a light source for the exposure is driven to move slowly the region to be exposed.

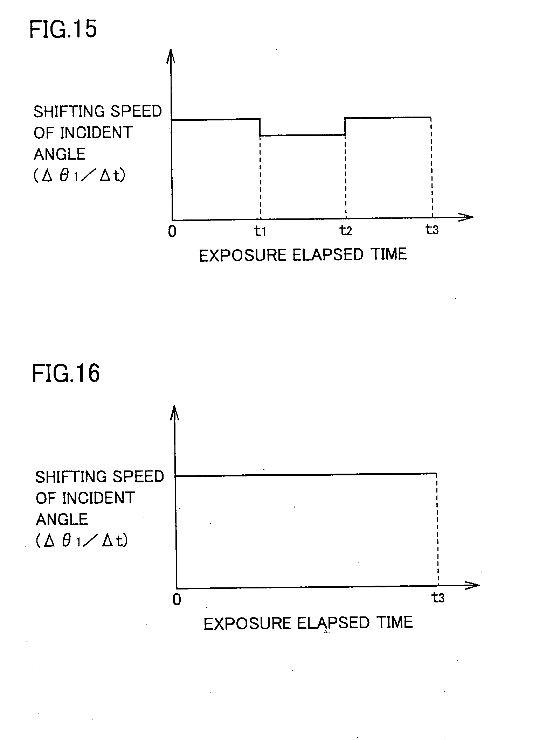

Fig. 15 is a graph representing the shifting speed of the light incident angle in the lens direction of the embodiment. The abscissa gives an exposure elapsed time, and the ordinate gives the shifting speed of the incident angle. Referring to Figs. 13 and 15, the exposure elapsed time is zero when the incident angle is indicated by arrow 43a. The exposure elapsed time is $t_3$ when the incident angle is indicated by arrow 43b. The incident angle is changed one time during a time period from 0 to $t_3$.

In the exposing step of the embodiment, the shifting speed of the incident angle becomes small during a certain period as illustrated in Fig. 15. During a period between exposure elapsed times $t_1$ and $t_2$, the incident angle is shifted at a lower shifting speed than that in the other periods. In this embodiment, the shifting speed of the incident angle is low during a period of a certain time width, which has a center substantially matching with a point of half the exposure elapsed time $t_3$. More specifically, the shifting speed of incident angle $\theta_1$ is low over a certain angular width having a center at a position of 90 degrees.

Fig. 16 is a graph of a comparative example. In the exposure method illustrated in Fig. 16, incident angle $\theta_1$ shifts at a constant shifting speed independently of the exposure elapsed time.

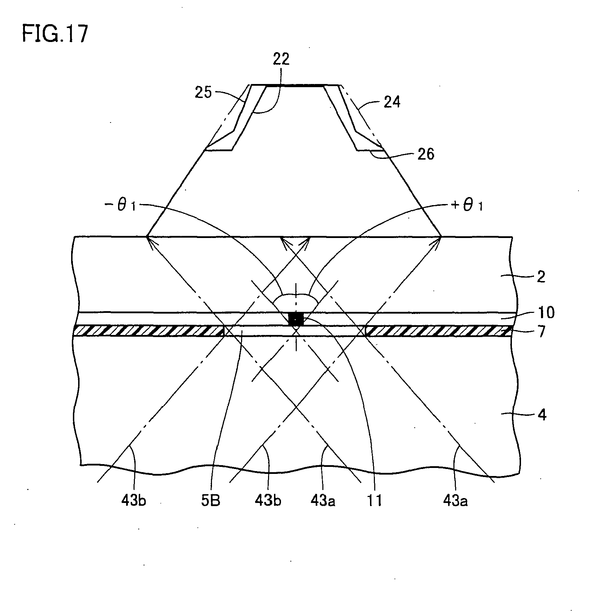

Fig. 17 is a diagram illustrating changes in quantity of the exposure applied to the photosensitive material. Exposure quantity distributions 22 and 24 are obtained when the exposure is performed over a range from incident angles $-\theta_1$ indicated by arrow 43a to incident angle $+\theta_1$ indicated by arrow 43b.

Exposure quantity distribution 24 is the distribution for obtaining the ideal lens form, and has a trapezoidal form. When the exposure is performed with the incident angle shifted at a constant speed as illustrated in Fig. 16, the exposure quantity exhibits exposure quantity distribution 22. Exposure quantity distribution 22 has a step 26 on each of the sides of the positive and negative incident angles. Therefore, the microlens having a convex sectional form includes steps near a top of the form. These steps are caused by the arrangement of light shield 11 on the light path for the exposure.

In contrast to this, the shifting speed of the incident angle is temporarily lowered, as is done in the exposure method of the embodiment illustrated in Fig. 15. More specifically, in the lens direction, the exposure is performed such that the shifting speed of the incident angle in a portion including the top of the above convex section is lower than the shifting speed of the incident angle in the portion including a foot of the convex section. In this case, exposure quantity distribution 25 has steps 26 which are partially similar in shape to ideal exposure quantity distribution 24. Thus, step 26 is small and provides the distribution similar to the ideal exposure quantity distribution. Therefore, it is possible to form the microlens that has a smooth form near the top.

As illustrated in Fig. 15, the exposure processing in this embodiment is configured to change discontinuously the exposure in the lens direction. Thus, the shifting speed of the incident angle instantaneously changes at exposure elapsed times $t_1$ and $t_2$. This method can discontinuously change the exposure without difficulty.

"To change discontinuously the exposure" in the invention means "to cause discontinuous change in ((light illuminance) x (exposure time))", and means, e.g., "to cause instantaneous change in shifting speed of incident angle at a certain time as illustrated in Fig. 15 or to cause instantaneous change in light illuminance as will be described later".

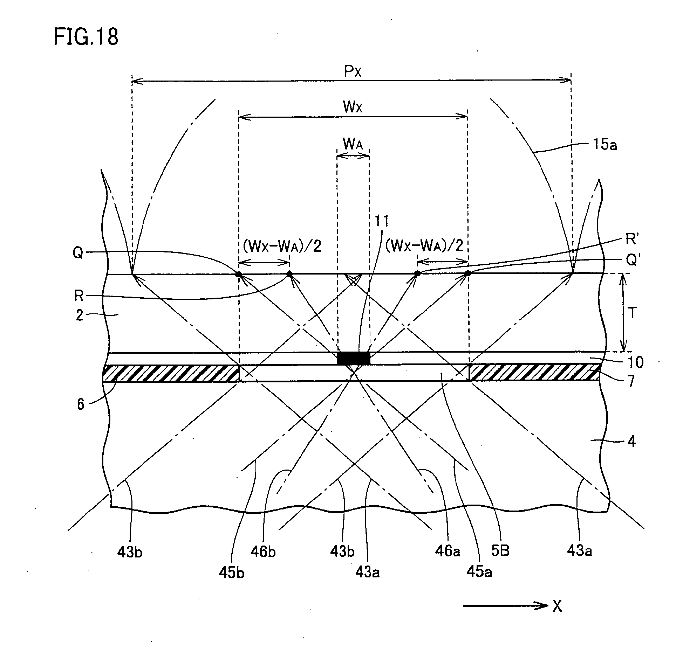

Fig. 18 shows, on an enlarged scale, a section in the lens direction of a portion of opening 5B in the embodiment. Referring to Figs. 13 and 18, incident angle $-\theta_1$ at which the shift in incident angle starts and incident angle $+\theta_1$ at which the shift in incident angle ends are preferably set such that the microlenses neighboring to each other in the lens direction are formed without a gap.

Also, the microlens array is preferably formed such that a boundary between the neighboring microlenses is in contact with TFT substrate 2. More specifically, it is preferable that, on the external surface of TFT substrate 2, the end of the exposure region related to one microlens and indicated by arrows 43a neither overlaps with nor comes in contact with the end of the exposure region related to the neighboring microlens and indicated by arrow 43b. In this embodiment, it is preferable that the thickness of the microlens becomes zero at a mid-point of black matrix 6 located between the neighboring picture elements, and the neighboring microlenses are in contact with each other at this mid-point.

In Fig. 18, $P_X$ indicates a picture element pitch (pitch of openings) in the lens direction (X direction), $W_X$ indicates a picture element width (opening width), T indicates the thickness of TFT substrate 2, and n indicates a refractivity of TFT substrate 2. $\theta_1$ is determined to satisfy the following formula so that the contact point between the neighboring convex microlenses may be located at the mid-point between the neighboring picture elements as described above. Based on the angle obtained by the following formula, the incident angle is shifted from $-\theta_1$ to $+\theta_1$.

$$\tan\theta_1 = ((P_X - W_X)/2)/(T/n) \cdots (3)$$

Although not shown, for forming the microlens having a uniform height in the lens ridge direction (Y direction) of the microlens, the incident angle of the light is likewise determined based on $\theta_2$ calculated, e.g., from the following formula. In the following formula defining $\theta_2$, $P_Y$ indicates the picture element pitch (pitch of the openings) in the lens ridge direction of the microlens, and $W_Y$ indicates the picture element width (width of the opening) in the lens ridge direction. Based on the angle obtained from the following formula, the incident angle is shifted from $-\theta_2$ to $+\theta_2$.

$$\tan\theta_2 = (P_Y/2)/(T/n) \cdots (4)$$

The microlens having a good lens effect can be formed by employing at least one of the above incident angles of $\theta_1$ and $\theta_2$.

For example, in this embodiment, pitch $P_X$ of the openings in the lens direction is 200 $\mu$m, pitch $P_Y$ of the openings in the lens ridge direction is 200 $\mu$m, width $W_X$ of the opening in the lens direction is 84 $\mu$m, width $W_Y$ of the opening in the lens ridge direction is 50 $\mu$m, physical thickness T of TFT substrate 2 is 400 $\mu$m, and refractivity n of TFT substrate 2 is 1.53. Therefore, the foregoing $\theta_1$ and $\theta_2$ are as follows:

$$\theta_1 = \tan^{-1}(58/260) = \text{about } 13 \text{ deg}. \quad \cdots (5)$$

$$\theta_2 = \tan^{-1}(100/260) = \text{about } 21 \text{ deg}. \quad \cdots (6)$$

The light passed through the opening forming the picture element may expand due to an influence of diffraction, in which case correction is performed after calculating the above $\theta_1$ and $\theta_2$.

Description will now be given on the discontinuous point at which a discontinuous change occurs in exposure quantity. In the lens direction (X direction), the shifting speed of the light incident angle increases in the portion including the foot of the convex form of the microlens to be formed, and the shifting speed of the incident angle decreases in the portion including the top of the convex form. In this embodiment, the discontinuous point in shifting speed is defined for changing instantaneously the shifting speed of the incident angle (see Fig. 15).

Referring to Fig. 18, the exposure is performed with the light in a region between two arrows 43a, and arrow 45a is a center line passing a center in the width direction of this region. Arrow 45a also indicates a center line extending a center in the width direction of the light passing through opening 5B for the exposure indicated by arrows 43a. A point Q indicates a start position of scanning of the exposure, and arrow 45a crosses the surface of TFT substrate 2 at point Q. Referring to Fig. 15, on the surface of TFT substrate 2, the shifting speed of the incident angle preferably decreases at a point within a range between the position of point Q (arrows 45a) and a point R (arrow 46a) where the scanning has been made over half a distance obtained by subtracting a width $W_A$ of light shield 11 from width $W_X$ of opening 5B. Thus, it is preferable that incident angle $\theta_{1a}$ at the discontinuous point where the shifting speed of the incident angle becomes discontinuous falls within the following range:

$$-\tan^{-1}\{((P_X - W_X)/2)/(T/n)\} \leq -\theta_{1a} \leq -\tan^{-1}\{((P_X - W_X)/2) - (W_X - W_A)/2)/(T/n)\}$$

$$\cdots (1)$$

Likewise, for the positive range of incident angle $\theta_1$, it is preferable that incident angle $\theta_{1b}$ at the discontinuous point is determined in the following range. An arrow 45b indicates a center line in the width direction of the light passing through opening 5B during the exposure indicated by arrows 43b. When the scanning with the shifted incident angle indicated by arrow 43b ends, arrows 45b indicating the center line in the width direction of the exposure light crosses TFT substrate 2 at a point Q', and a point R' shifted inward by only the same width as the foregoing case is set. The shifting speed of the incident angle preferably changes between point R' (arrows 46b) and point Q' (arrow 45b):

$$\tan^{-1}\{((P_X - W_X)/2) - (W_X - W_A)/2)/(T/n)\} \leq +\theta_{1b} \leq \tan^{-1}\{((P_X - W_X)/2)/(T/n)\} \cdots$$

$$(2)$$

By setting incident angles $-\theta_{1a}$ and $+\theta_{1b}$ at the discontinuous points to fall within the ranges of the foregoing two formulas, the steps 26 in exposure quantity distribution 26 that may be caused by light shield 11 can be effectively reduced.

Referring to Fig. 18, the shifting speed of the incident angle is relatively reduced at least in a range between points R and R'. Thereby, it is possible to increase the exposure quantity in the portion where a step occurs in exposure quantity distribution, and the step in exposure quantity difference can be reduced.

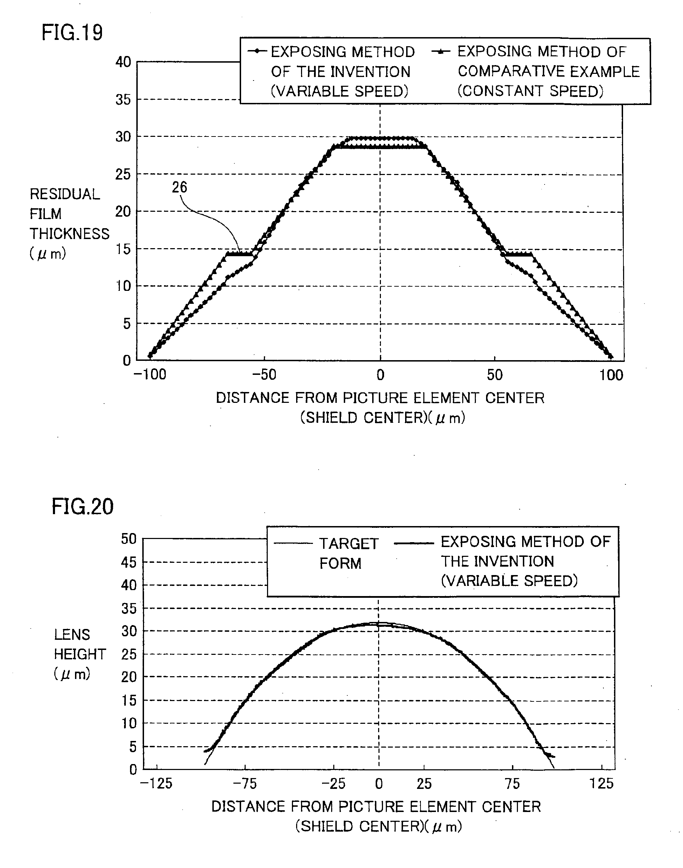

Fig. 19 is a graph illustrating the thickness of a residual film in the case where the shifting speed of the incident angle changes according to the invention, and the case where the shifting speed of the incident angle is constant. The abscissa gives the distance from the center of the picture element in the lens direction, and thus the distance from the center of the light shield in this embodiment. The ordinate gives the thickness of the residual film of the photosensitive material corresponding to the exposure quantity. By multiplying the sensitivity curve of the photosensitive material by the exposure quantity, the curing quantity (film thickness) is determined. The residual film thickness is the film thickness obtained after the development.

As illustrated in Fig. 19, the exposure method of the comparative example causes step 26 in residual film thickness, but the exposure method of the invention decreases the step and provides an entirely smooth gradient.

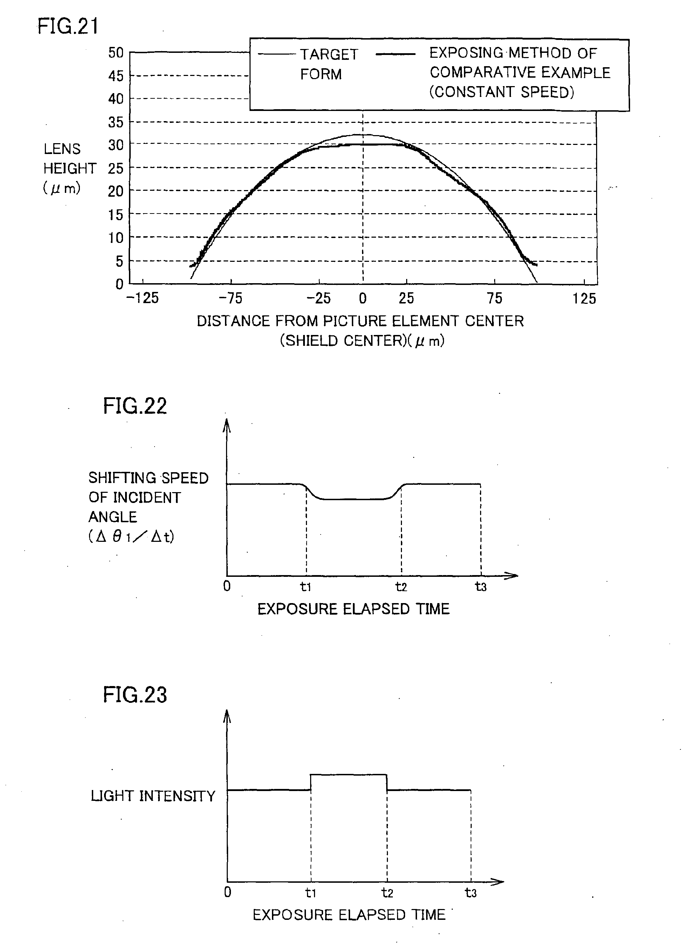

Fig. 20 is a graph illustrating the lens height of the microlens formed by the exposure method of the invention. Fig. 21 is a graph of the lens height of the microlens formed by the exposure method of the comparative example. The abscissa gives the distance from the center of the picture element in the lens direction, and the ordinate gives the lens height. In each of these graphs, a graph of a target form is also drawn.

In this embodiment, the shifting speed (scanning speed) of the incident angle at each of the start and end of the exposure is 7.2 deg/sec in the lens direction, and the shifting speed (scanning speed) of the incident angle in the region including the top of the convex section is 6.0 deg/sec.

As illustrated in Fig. 20, the exposure method of the invention can form the microlens of the form similar to the target form. In contrast to this, the exposure method that shifts the light incident angle at a constant speed forms the lens of the form that is different from the target form and includes steps, as illustrated in Fig. 21.

According to the invention, as described above, the microlens having a sectional form including the reduced step can be formed by changing the shifting speed of the incident angle at an appropriate point or by changing the light intensity at an appropriate point, even when the display panel has the light shield formed inside the opening arranged for forming the pixel. Further, it is possible to form the microlens having the good light collecting effect and thus having good lens characteristics. Consequently, it is possible to manufacture the liquid crystal display panel that can perform the display with higher brightness. For example, the microlens that was formed by the manufacturing method of the embodiment could increase the brightness on the front side by 1.3 times while keeping the intended characteristics of the view angle.

The apparatus of manufacturing the liquid crystal display panel of the embodiment includes exposing means for performing the exposure of the photosensitive material, and the exposing means is configured to allow shifting of the light incident angle. The exposing means is provided with means for shifting the speed at which the incident angle for the exposure changes. In this embodiment, a reflector or mirror reflects the light emitted from the light source. By driving this mirror, the shifting speed of the light incident angle is changed. This configuration can achieve the exposure method in which the shifting speed of the incident angle changes as described above so that the microlens of the good lens characteristics can be formed.

The apparatus of manufacturing the liquid crystal display panel of the embodiment is configured such that it can change continuously or intermittently the incident angle of the parallel light rays applied from the light source into the opening. Further, it can change continuously or discontinuously the shifting speed of the incident angle.

In the apparatus of manufacturing the liquid crystal display panel in this embodiment, the reflector reflects the light incident from the light source, and a computer controls the movement of the reflector to shift the incident angle with respect to the opening and the shifting speed of the incident angle.

The means for changing the shifting speed of the light incident angle is not restricted to the above form, and may be configured to move the light source itself. Further, it may be configured to move a base carrying the liquid crystal display panel.

In this embodiment, as shown in Fig. 15, the shifting speed of the incident angle instantaneously changes at exposure elapsed times $t_1$ and $t_2$. Thus, the exposure discontinuously changes. However, this is not restrictive, and the shifting speed of the incident angle may change continuously or gradually as illustrated in Fig. 22. For example, the shifting speed of the incident angle may gradually decrease or increase for a period of a changing time width around exposure elapsed time $t_1$ or $t_2$. The shifting speed of the incident angle may change intermittently.

In this embodiment, the shifting speed of the incident angle changes. This is not restrictive, and a structure of increasing and/or decreasing the light intensity may be employed. More specifically, the apparatus of manufacturing the liquid crystal display panel may change the light intensity by employing means for changing the light intensity.

Fig. 23 is a graph illustrating an exposure method in which the light intensity changes. As illustrated in Fig. 23, the intensity of the light for the exposure increases at exposure elapsed time $t_1$. Further, the light intensity decreases at exposure elapsed time $t_2$. The shifting speed of the incident angle is constant during such increase and decrease. This method can form the microlens having a good sectional form. Preferably, the points of the above change in exposure are set to fall within the angular ranges defined by the foregoing formulas (1) and (2).

The embodiment has been described in connection with the example in which the light shield is circular in a plane view, and has an island-like form. However, these forms are not restrictive, and the light shield may have any plane form.

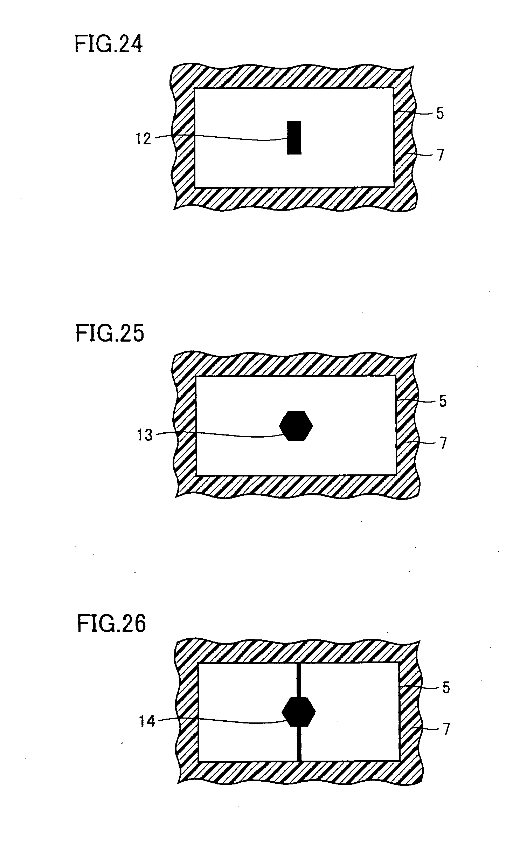

Fig. 24 schematically shows another light shield opposed to the opening. An opening 5 is substantially rectangular in a plane form, and a light shield 12 having a rectangular form in a plane view is formed at a center of gravity of the rectangle of opening 5.

Fig. 25 schematically shows still another light shield opposed to the opening. Opening 5 is substantially rectangular in a plane form, and a light shield 13 substantially having a regularly hexagonal form in a plane view is formed at the center of gravity of the rectangle of opening 5.

Fig. 26 schematically shows yet another light shield opposed to the opening. Opening 5 is substantially rectangular in a plane form, and a light shield 14 substantially having a regularly hexagonal form in a plane view is formed at the center of gravity of the rectangle of opening 5. Light shield 14 has portions linearly extending from the hexagonal portion. The method of manufacturing the liquid crystal display panel according to the invention can likewise be applied to the light shield other than the light shield having an island-like form with respect to the opening.

In this embodiment, the exposure is performed while moving the exposure target region in the lens ridge direction (Y direction). However, this is not restrictive, and the exposure may be performed while moving the light in the lens direction (X direction).

The embodiment has been described in connection with the method of manufacturing the microlens having a cylindrical form. However, this form is not restrictive, and the invention may be applied to the method of manufacturing the microlens for each of the picture elements or pixels.

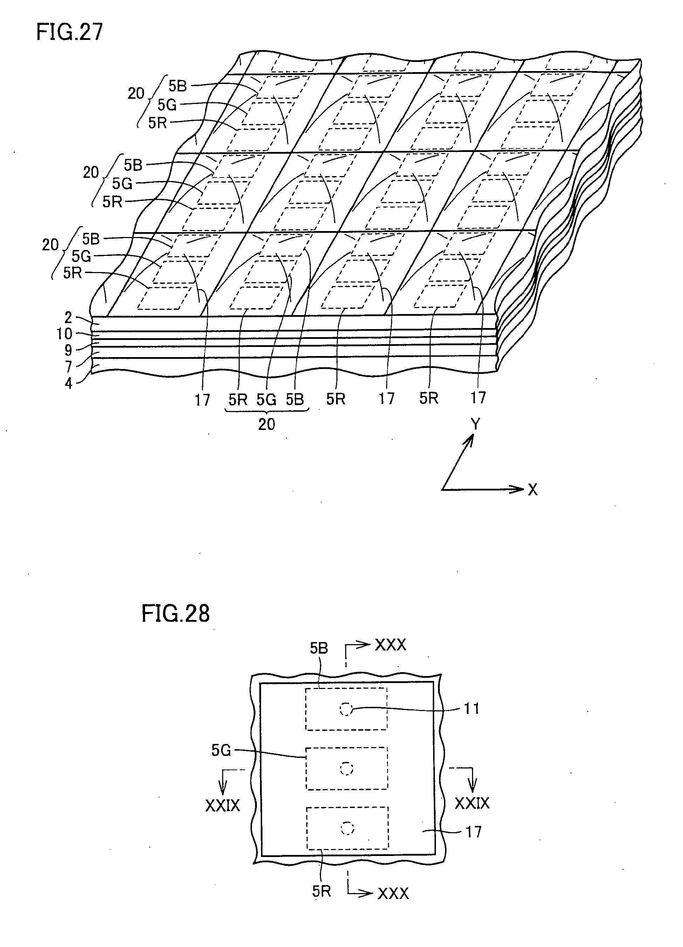

Fig. 27 is a schematic perspective view of a second liquid crystal display panel of the embodiment. Liquid crystal layer 9 is arranged between TFT substrate 2 and opposite substrate 4, as is done in the first liquid crystal display panel shown in Fig. 2. In the liquid crystal display panel shown in Fig. 27, one microlens 27 is formed for each pixel.

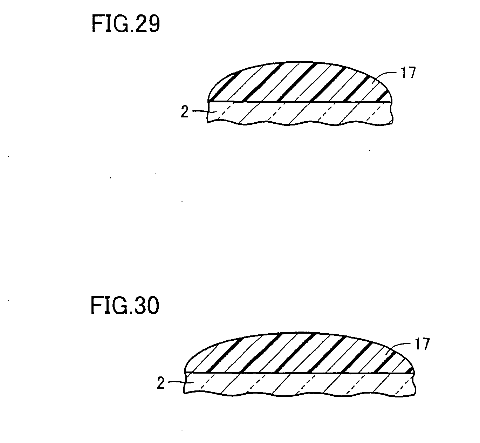

Fig. 28 schematically shows a section of one pixel. Fig. 29 shows a section taken along line XXIX - XXIX in Fig. 28, and Fig. 30 shows a section taken along line XXX - XXX in Fig. 28.

As shown in Figs. 28 to 30, microlens 17 has a convex form in each of the sections in the X and Y directions. More specifically, the lens direction of microlens 17 matches with each of the X and Y directions. Three picture elements aligned in the Y direction form one pixel 20. One microlens of a convex form is formed for one pixel 20 including the picture elements, i.e., openings 5R, 5G and 5B. Microlens 17 is formed corresponding to each pixel.

In this microlens 17, since the Y direction is also the lens direction, the exposure can also be performed for the Y direction similarly to the X direction to form the microlens also having the convex form in the section in the Y direction.

The examples of the embodiment have been described in connection with the liquid crystal display panel having the color filters. However, this form is not restrictive, and present invention can be applied to a monochromatic liquid crystal display panel having pixels. In addition to the semi-transmissive liquid crystal display panel, the invention can be applied to the transmissive type of liquid crystal display panel The application of the invention can improve the brightness without deteriorate the view angle.

Although the present invention has been described and illustrated in detail, it is clearly understood that the same is by way of illustration and example only and is not to be taken by way of limitation, the spirit and scope of the present invention being limited only by the terms of the appended claims.

INDUSTRIAL APPLICABILITY

The invention can be advantageously applied to the display panel.

**Claims**

1. A method of manufacturing a display panel including:

   a microlens formed at a surface of a substrate on an arrangement side of a backlight, and
   a light shield formed corresponding to an inner region of an opening provided for forming a pixel, comprising:
   a steps of arranging a photosensitive material on a surface of said substrate on the arrangement side of said backlight; and
   an exposing step of applying light through said opening from a side opposite to the arrangement side of said backlight, and thereby partially curing said photosensitive material, wherein
   said exposing step includes a step of performing exposure while shifting an incident angle of said light, and thereby curing said photosensitive material to exhibit a section having a convex form in one direction, and
   said exposing step includes a step of changing at least one of a speed of shifting said incident angle in said one direction and an intensity of said light.

2. The method of manufacturing the display panel according to claim 1, wherein
   said exposing step includes a step of discontinuously changing the exposure in said one direction.

3. The method of manufacturing the display panel according to claim 2, wherein
   said exposing step is executed to cause discontinuously the change in exposure at each of a discontinuous point $-\theta_{1a}$ and a discontinuous point $+\theta_{1b}$, and said two discontinuous points fall within ranges defined by the following two formulas (1) and (2):

   $$-\tan^{-1}\{((P_X - W_X)/2)(T/n)\} \leq -\theta_{1a} \leq -\tan^{-1}\{(P_X - W_X)/2 - (W_X - W_A)/2)(T/n)\} \cdots$$
   $$(1)$$

   $$\tan^{-1}\{((P_X - W_X)/2 - (W_X - W_A)/2)(T/n)\} \leq +\theta_{1b} \leq \tan^{-1}\{((P_X - W_X)/2)(T/n)\} \cdots (2)$$

   where $P_x$ represents a pitch of said openings in said one direction, $W_x$ indicates a width of said opening in said one direction, $W_A$ indicates a width of said light shield in said one direction, T indicates a thickness of said substrate, n indicates a refractivity of said substrate, $+\theta_{1a}$ and $-\theta_{1b}$ are incident angles of said light with respect to a direction perpendicular to a main surface of said substrate in said one direction, and the plus and the minus indicate one and the other sides, respectively.

4. The method of manufacturing the display panel according to claim 1, wherein
   said exposing step is executed such that said shifting speed at a portion including a top of said convex form is lower than that at a portion including a foot of said convex form.

5. The method of manufacturing the display panel according to claim 1, wherein
   said exposing step is executed such that the intensity of said light at the portion including the top of said convex form is larger than that at the portion including the foot of said convex form.

6. The method of manufacturing the display panel according to claim 1, wherein
   said display panel has said light shield arranged in the position substantially corresponding to a center of said opening and taking an island-like form.

7. An apparatus of manufacturing a display panel including a microlens formed at a surface of a substrate on an arrangement side of a backlight, and a light shield formed corresponding to an inner region of an opening provided for forming a pixel, comprising:

exposing means for exposing a photosensitive material, wherein
said exposing means is configured to allow changing of an incident angle of light, and
said exposing means includes at least one of means for changing a shifting speed of the incident angle for the exposure and means for changing an intensity of said light.

**Amended claims under Art. 19.1 PCT**

7. An apparatus of manufacturing a display panel including a microlens formed at a surface of a substrate on an arrangement side of a backlight, and a light shield formed corresponding to an inner region of an opening provided for forming a pixel, comprising:

exposing means for exposing a photosensitive material, wherein
said exposing means is configured to allow changing of an incident angle of light, and
said exposing means includes at least one of means for changing a shifting speed of the incident angle for the exposure and means for changing an intensity of said light.

8. (Added) The apparatus of manufacturing the display panel according to claim 7, wherein
said exposing means is configured to be capable of discontinuously changing the exposure in one direction.

9. (Added) The apparatus of manufacturing the display panel according to claim 8, wherein
said exposing means is configured to cause discontinuously the change in exposure at each of a discontinuous point $-\theta_{1a}$ and a discontinuous point $+\theta_{1b}$, and
said exposing means is configured to keep said two discontinuous points within ranges defined by the following two formulas (1) and (2):

$$-\tan^{-1}\{((P_X - W_X)/2)(T/n)\} \leq -\theta_{1a} \leq -\tan^{-1}\{(P_X - W_X)/2 - (W_X - W_A)/2)(T/n)\} \cdots (1)$$

$$\tan^{-1}\{((P_X - W_X)/2 - (W_X - W_A)/2)(T/n)\} \leq +\theta_{1b} \leq \tan^{-1}\{(P_X - W_X)/2)(T/n)\} \cdots (2)$$

where $P_X$ represents a pitch of said openings in said one direction, $W_X$ indicates a width of said opening in said one direction, $W_A$ indicates a width of said light shield in said one direction, T indicates a thickness of said substrate, n indicates a refractivity of said substrate, $+\theta_{1a}$ and $-\theta_{1b}$ are incident angles of said light with respect to a direction perpendicular to a main surface of said substrate in said one direction, and the plus and the minus indicate one and the other sides, respectively.

10. (Added) The apparatus of manufacturing the display panel according to claim 7, wherein
said apparatus of manufacturing the display panel is configured to form said microlens having a section of a convex form, and
said exposing means is configured such that said shifting speed at a portion including a top of said convex form is lower than that at a portion including a foot of said convex form.

11. (Added) The apparatus of manufacturing the display panel according to claim 7, wherein
said apparatus of manufacturing the display panel is configured to form said microlens having a section of a convex form, and
said exposing means is configured such that the intensity of said light at the portion including the top of said convex form is larger than that at the portion including the foot of said convex form.

FIG.1

FIG.2

## FIG.3

## FIG.4

FIG.5

FIG.6

FIG.7

FIG.8

FIG.9

FIG.10

## FIG.11

## FIG.12

## FIG.13

Labels: 15b, $-\theta_1$, 15a, $+\theta_1$, 3, 2, 10, 7, 6, 4, 43b, 5B, 43b, 43a, 11, 43a → X

## FIG.14

Labels: $-\theta_2$, $+\theta_2$, 15b, 15a, 8, 2, 10, 7, 6, 4, 44b, 5B, 44b, 44a, 11, 44a → Y

FIG.15

SHIFTING SPEED
OF INCIDENT
ANGLE
$(\Delta \theta_1 / \Delta t)$

0        t1        t2        t3

EXPOSURE ELAPSED TIME

FIG.16

SHIFTING SPEED
OF INCIDENT
ANGLE
$(\Delta \theta_1 / \Delta t)$

0                              t3

EXPOSURE ELAPSED TIME

FIG.17

FIG.18

FIG.19

FIG.20

## FIG.21

Legend:
— TARGET FORM
━━ EXPOSING METHOD OF COMPARATIVE EXAMPLE (CONSTANT SPEED)

Y-axis: LENS HEIGHT ($\mu$m) — 0, 5, 10, 15, 20, 25, 30, 35, 40, 45, 50

X-axis: -125, -75, -25, 0, 25, 75, 125

DISTANCE FROM PICTURE ELEMENT CENTER (SHIELD CENTER)($\mu$m)

## FIG.22

Y-axis: SHIFTING SPEED OF INCIDENT ANGLE ($\Delta\theta_1 / \Delta t$)

X-axis: 0, $t_1$, $t_2$, $t_3$

EXPOSURE ELAPSED TIME

## FIG.23

Y-axis: LIGHT INTENSITY

X-axis: 0, $t_1$, $t_2$, $t_3$

EXPOSURE ELAPSED TIME

FIG.24

12

5

7

FIG.25

13

5

7

FIG.26

14

5

7

FIG.27

20 — 5B
5G
5R

20 — 5B
5G
5R

20 — 5B
5G
5R

2
10
9
7
4

17   5R 5G 5B   5R   17   5R   17

20

Y

X

FIG.28

5B   → XXX

11

5G

XXIX   XXIX

17

5R   → XXX

FIG.29

17

2

FIG.30

17

2

## INTERNATIONAL SEARCH REPORT

| | International application No. |
|---|---|
| | PCT/JP2005/022090 |

A. CLASSIFICATION OF SUBJECT MATTER
*G02F1/1335*(2006.01), *G02B3/00*(2006.01), *G02F1/13357*(2006.01)

According to International Patent Classification (IPC) or to both national classification and IPC

B. FIELDS SEARCHED

Minimum documentation searched (classification system followed by classification symbols)
*G02F1/1335*(2006.01), *G02B3/00*(2006.01), *G02F1/13357*(2006.01)

Documentation searched other than minimum documentation to the extent that such documents are included in the fields searched
Jitsuyo Shinan Koho        1922-1996   Jitsuyo Shinan Toroku Koho   1996-2006
Kokai Jitsuyo Shinan Koho  1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2000-292862 A  (Dainippon Printing Co., Ltd.), 20 October, 2000 (20.10.00), Par. Nos. [0012] to [0066]; Figs. 2 to 8 (Family: none) | 1-7 |
| A | JP 2002-62818 A  (Sony Corp.), 28 February, 2002 (28.02.02), Full text; all drawings & US 2002-80323 A1 | 1-7 |
| A | JP 2002-139824 A  (Ricoh Optical Industries Co., Ltd.), 17 May, 2002 (17.05.02), Par. Nos. [0009] to [0062]; Figs. 1, 12 (Family: none) | 1-7 |

☒  Further documents are listed in the continuation of Box C.        ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 January, 2006 (25.01.06) | 31 January, 2006 (31.01.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2005/022090 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 9-166701 A  (Toray Industries,  Inc.), 24 June, 1997 (24.06.97), Full text; all drawings (Family: none) | 1-7 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002062818 A

- JP 2004093846 A